Europäisches Patentamt

**European Patent Office**

Office européen des brevets

(19)

(11) Publication number: **0 080 989**

**A1**

(12)

# EUROPEAN PATENT APPLICATION

(21) Application number: **82850238.5**

(22) Date of filing: **23.11.82**

(51) Int. Cl.³: **B 60 P 1/54**

(30) Priority: **30.11.81 SE 8107118**

(43) Date of publication of application:
**08.06.83 Bulletin 83/23**

(84) Designated Contracting States:
**AT BE CH DE FR GB IT LI LU NL SE**

(71) Applicant: **LESSEBO HYDRAULIK AB**
**Lebovägen**
**S-360 50 Lessebo(SE)**

(72) Inventor: **Fransson, Per Josef Börje**
**Dammgatan 11**
**S-360 50 Lessebo(SE)**

(74) Representative: **Ryrlén, Evert et al,**
**ALFONS HEDBERGS PATENTBYRÅ AB**
**Aschebergsgatan 35**
**S-411 33 Göteborg(SE)**

(54) **A device in vehicle-mounted lifting arms.**

(57) A device in freight handling gear comprising two lifting arms which are mounted on a vehicle chassis. The lifting arms (6) are arranged to perform parallel movements to load and unload container-type load carriers in the lengthwise direction.

The lifting arms (6) are mounted on a carriage (4) which is arranged for movement in the lengthwise direction of the vehicle. The carriage serves as a guide in which the lifting arms (6) are movable towards and away from one another in the transverse direction of the vehicle chassis.

Fig.1

EP 0 080 989 A1

Croydon Printing Company Ltd.

## A Device in Vehicle-Mounted Lifting Arms

Inventor: Per Josef Börje Fransson, Engineer

The subject invention concerns a device in freight handling gear comprising two lifting arms which are mounted on a vehicle chassis and which are arranged to perform parallel movements for the purpose of loading and unloading load carriers in the lengthwise direction.

Goods vehicles designed to transport containerized loads are often equipped with hoisting gear by means of which the containers can be lifted onto and off the vehicle. It is desirable that the equipment is designed to allow loading and transport of containers of maximum width, that is, the maximum width allowed on public roads. Hitherto, only vehicles equipped with hoisting gear of side-loading type could be used for handling and transport of containers of that size.

One disadvantage inherent in vehicles equipped with side-loaders is that this type of hoisting gear requires comparatively large space for loading and unloading operations. Vehicles equipped with hoisting gear able to handle containers in the lengthwise direction of the vehicle are more useful and versatile but are not capable of handling maximum-width containers.

The subject invention has for its purpose to provide a freight handling gear allowing maximum-width containers to be loaded and handled in the lengthwise direction of the goods vehicle.

The freight handling gear in accordance with the invention is characterised in that the two lifting arms are mounted on a carriage, said carriage arranged for movement in the lengthwise direction of the vehicle chassis and serving as a guide and in that the lifting arms are arranged for movement in said guide towards or away from one another in the transverse direction of the vehicle chassis.

The invention will be described in closer detail in the following with reference to the accompanying drawings, wherein

Fig. 1 is a lateral view of a goods vehicle equipped with freight handling gear in accordance with the invention, the freight handling gear being shown in four different positions,

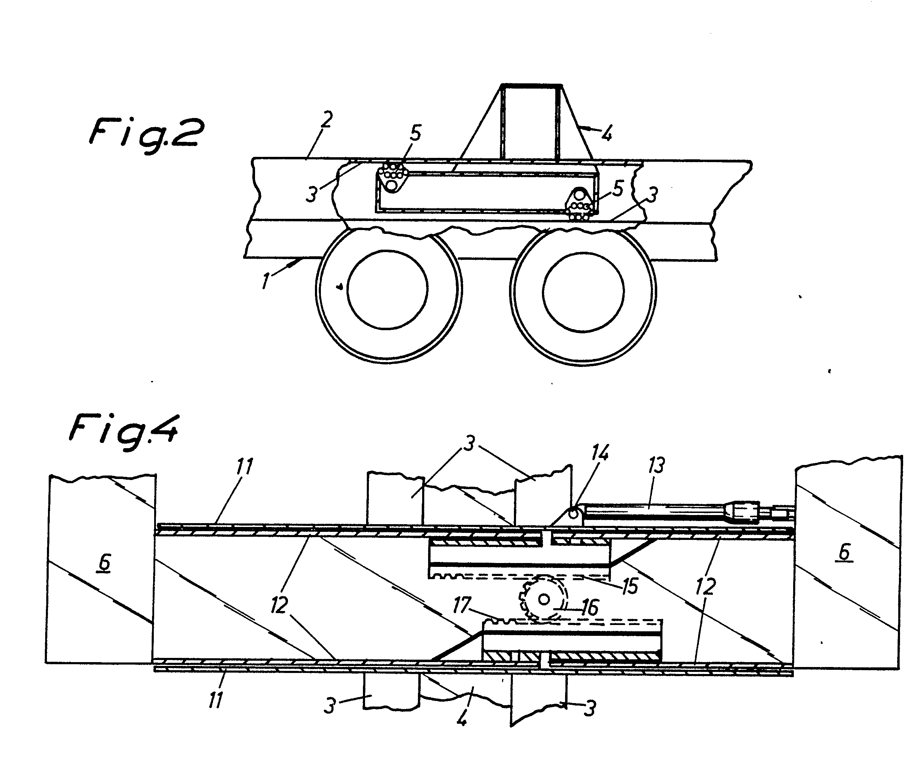

Fig. 2 is a broken view of the chassis of the goods vehicle including the carriage arranged for movement in the lengthwise direction of the chassis,

Fig. 3 is an end view of the truck, and

Fig. 4 illustrates the carriage in a sectional view from above.

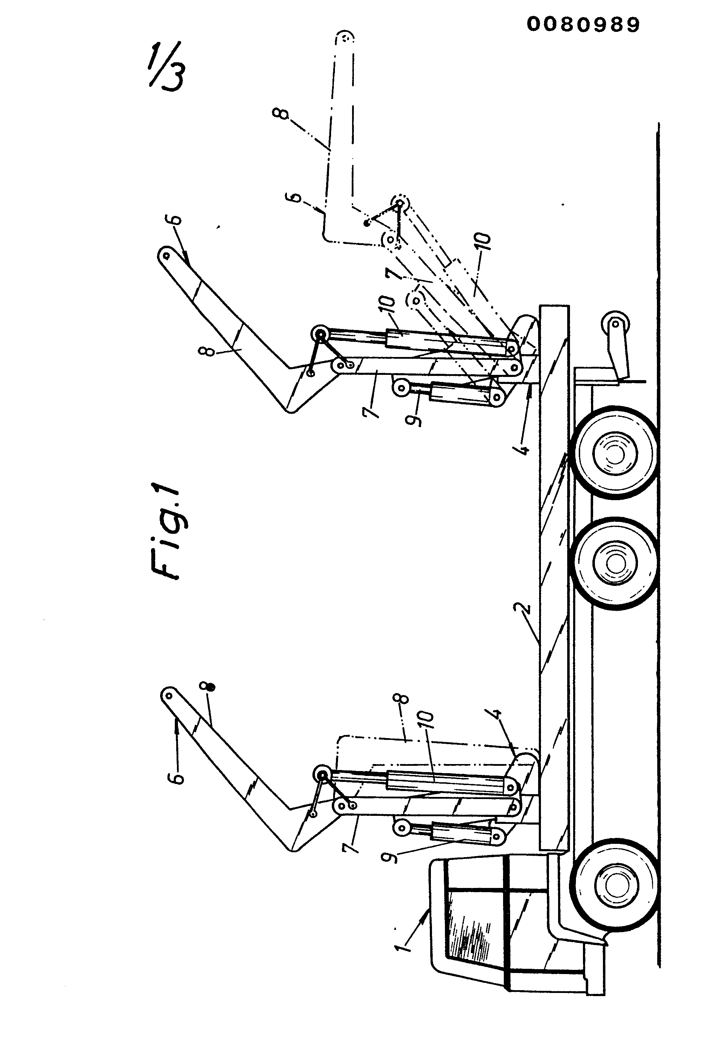

In the drawings, Fig. 1 illustrates a lorry, designated by numeral 1, which is provided with a load-receiving surface 2 to support containers. Two lengthwise rails 3 are arranged on the load-receiving surface 2, and a carriage 4 is arranged to move on the rails by means of trolleys 5.

At each one of its sides the carriage 4 is provided with a lifting arm 6 consisting of a lower arm link 7 which is articulated to the lorry chassis, of an upper arm link 8 which is articulated to the lower arm, and of two piston-and-cylinder units 9 and 10 which are arranged to actuate respectively the lower and the upper arms 7 and 8. With the aid of the carriage 4 the lifting arms are also movable between a transport position close to the driver's cabin of the lorry and a loading and unloading position at the rear end of the load-receiving surface 2, as indicated in Fig. 1.

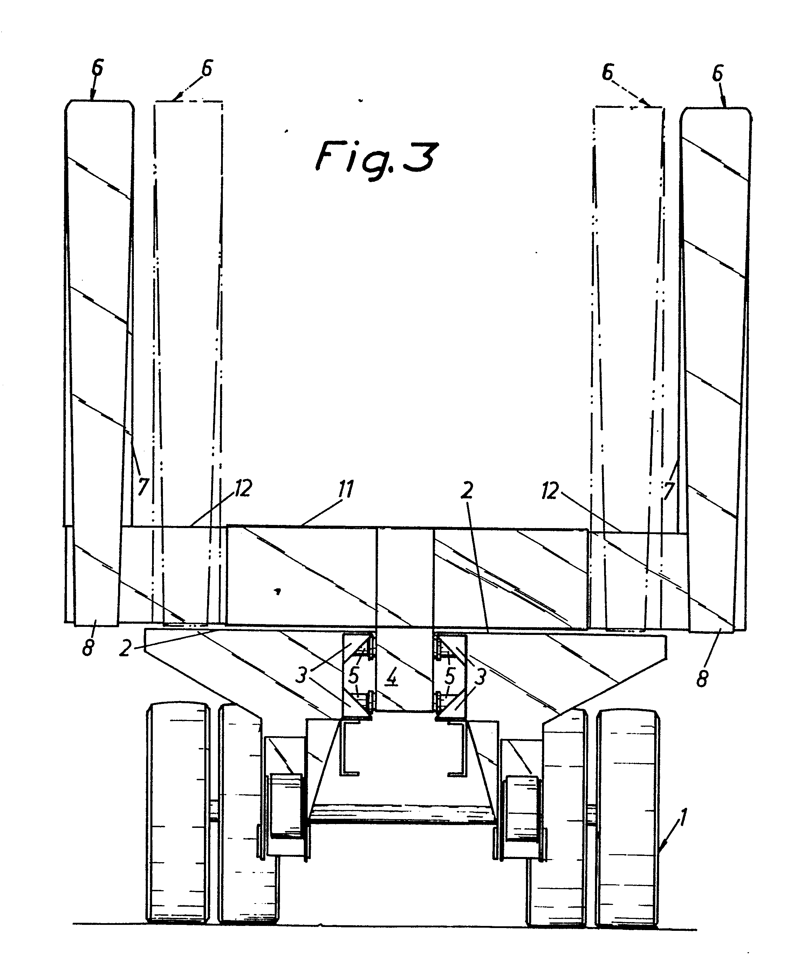

The carriage 4 includes a cross piece 11 in which members 12 which project angularly from the lifting arms are mounted for movement in the transverse direction of the lorry, as indicated in Fig. 3. The cross piece 11 consists of a square tube in which the angularly projecting members 12 (likewise formed by square tubing) are non-rotationally supported.

The angularly projecting members 12 are interconnected by a rack mechanism - see Fig. 4 - and are actuated for movement towards and away from one another by means of a piston-and-cylinder unit 13. The latter is positioned intermediate a bracket 14 which is mounted on the cross piece 11 and the right-hand lifting arm 6. Upon actuation of the piston-and-cylinder unit 13 to move this lifting arm laterally outwards, that is, to the right as seen in Fig. 4, the rack 15, which is positioned on the inner face of the right-hand angular member 12 as seen in Fig. 4, will be moved laterally in the same direction and in doing so turn a pinion 16 in a clockwise direction. The pinion 16 is rotatably mounted on the cross piece 11 and in its turn it acts on a second rack 17, which is secured on the inner face of the left-hand angular member 12.

Owing to this arrangement, the two angular members 12 - and thus the arms 6 on which they are mounted - will move uniformly towards and away from one another, depending on the actuation of the piston-and-cylinder unit 13.

When a maximum-size container 2 is to be loaded onto the load-receiving surface 2 of the lorry the two lifting arms 6 are moved laterally outwards so as to be spaced apart by a distance allowing the containers to be accommodated between the two arms. The carriage 4 is displaced to the rear end of the lorry and the two lifting arms are moved in parallel down to their gripping position adjacent the container (not shown). The container is lifted by the lifting arms 6 with the container suspended in a position between the two arms. The carriage is then displaced across the load-receiving surface 2 sufficiently far to allow the container to be deposited thereon. The container is released from the lifting arms and the latter are returned to their transport position (that is, the folded position illustrated in Fig. 1 in dash-and-dot lines). The carriage 4 is moved to the forwards position adjacent the driver's cabin as seen in Fig. 1 and the lifting arms 6 are displaced laterally to their inner position. Consequently, they will be positioned within the maximum width of the vehicle and the container may be transported on public roads.

Because the containers may be lifted on and off the vehicle in their lengthwise direction by means of the freight handling gear in accordance with the invention it becomes possible to load and unload containers of maximum width also in narrow storage spaces where the manoeuvrability is very restricted.

The invention is not limited to the example described in the afore-going but a number of modifications are possible within the scope of the appended claims. The lateral displacement of the two angularly projecting members 12 may be effected by other means than those shown. The freight handling gear may of course be used on other types of vehicles than lorries. The design of the lifting arms 6 may differ from that shown. One or both of the lifting arms 6 may be arranged for turning motion in the horizontal plane. When this is the case, the lifting arm could be used to lift and load objects into a container positioned on the lorry 1.

Valves and lines included in the hydraulic system have not been shown in the drawings in order not to unnecessarily clutter the latter. For the same reason the electric equipment which preferably is used to control the valves from the driver's cabin of the lorry
or from a portable control box are not shown either.

0080989

Claims

1. A device in freight handling gear comprising two lifting arms, which arms are mounted on a vehicle chassis and which are arranged to perform parallel movements to load and unload load carriers in the length- wise direction, c h a r a c t e r i s e d    i n t h a t

the lifting arms (6) are mounted on a carriage (4), said carriage arranged for movement in the lengthwise direction of the vehicle chassis and serving as a guide, said lifting arms (6) being arranged for movement in said guide towards and away from one another in the transverse direction of the vehicle chassis.

2. A device in freight handling gear as claimed in claim 1, c h a r a c t e r i s e d    i n    t h a t the carriage is provided with a cross piece (11) consisting of square tubing, said two lifting arms (6) non-rotatably supported at opposite ends of said cross piece (11) by means of two members (12), each such member being fast with and projecting angularly from its respective one of said lifting arms.

3. A device in freight handling gear as claimed in any one of the preceding claims, c h a r a c t e r i s e d i n   t h a t said angularly projecting members (12) are interconnected by a rack and pinion mechanism comprising two racks (15, 17), each one of which is secured to its respective one of said angular members (12), and a pinion (16), which pinion engages in said two racks (15, 17) in such a manner that upon displacement of one of the angularly projecting members (12) in one lateral direction, for instance with the aid of a piston-and-cylinder unit (13), the opposite angular member (12) will be displaced correspondingly in the opposite lateral direction.

*Fig.1*

0080989

Fig.2

Fig.4

0080989

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | B 60 P 1/54 |
| A | US-A-3 586 183 (SHAFFER) <br> * Abstract; figures 1-3 * | 1 | |
| | --- | | |
| A | GB-A-1 556 531 (DUNKERLEY) <br> * Figures 1-5 * | 1,2 | |
| | --- | | |
| A | US-A-2 971 661 (ISAACS) <br> * Figures 1, 2 * | 2 | |
| | --- | | |
| A | US-A-2 911 118 (TAPP) <br> * Column 4, lines 24-27; figure 8 * | 3 | |
| | --- | | |
| A | AT-B- 353 442 (TÖRNEBÄCK) | | |
| | ----- | | **TECHNICAL FIELDS SEARCHED (Int. Cl. 3)** <br><br> B 60 P 1/00 |

The present search report has been drawn up for all claims

| Place of search <br> BERLIN | Date of completion of the search <br> 15-02-1983 | Examiner <br> LUDWIG H J |
|---|---|---|